(19) Europäisches Patentamt
European Patent Office
Office européen des brevets

(11) EP 1 995 191 A1

(12) **EUROPÄISCHE PATENTANMELDUNG**

(43) Veröffentlichungstag:
26.11.2008 Patentblatt 2008/48

(51) Int Cl.:
*B65G 47/31* (2006.01)    *B65G 43/08* (2006.01)

(21) Anmeldenummer: 08009473.3

(22) Anmeldetag: 23.05.2008

(84) Benannte Vertragsstaaten:
AT BE BG CH CY CZ DE DK EE ES FI FR GB GR
HR HU IE IS IT LI LT LU LV MC MT NL NO PL PT
RO SE SI SK TR
Benannte Erstreckungsstaaten:
AL BA MK RS

(30) Priorität: 25.05.2007 DE 102007024673

(71) Anmelder: Holtec GmbH & Co.KG
53940 Hellenthal (DE)

(72) Erfinder: Gebele, Alexander
53879 Euskirchen (DE)

(74) Vertreter: Gerstein, Hans Joachim et al
Gramm, Lins & Partner GbR
Freundallee 13
30173 Hannover (DE)

(54) **Rundholzfördereinrichtung**

(57) Eine Rundholzfördereinrichtung (1) mit einer Cäuertransporteinheit (2) mit einer Fördereinheit, die zum Transport von Rundholzstämmen (3) in eine Vorzugsrichtung quer zur Längsachse der Rundholzstämme (3) eingerichtet ist, und mit einer sich an die Quertransporteinheit (2) anschließenden Längstransporteinheit (4) mit einer ersten Längsfördereinheit (5) und einer sich daran anschließenden zweiten Längsfördereinheit (6), die zum Transport der von der Quertransporteinheit (2) auf die erste Längsfördereinheit (5) übergebenden Rundholzstämme (3) durch die erste Längsfördereinheit (5) und zum Weitertransport durch die zweite Längsfördereinheit (6) in einer Vorzugsrichtung in Richtung der Längsachse der Rundholzstämme (3) eingerichtet ist, wird beschrieben. Die Vorschubgeschwindigkeit der ersten und zweiten Längsfördereinheiten (5, 6) sind unabhängig voneinander mit einer Steuereinheit (7) steuerbar. Eine Detektionseinheit (8) ist zur Detektion der Ist-Lücke zwischen zwei auf der Längstransporteinheit (4) aufeinander folgenden Rundholzstämmen (3) vorgesehen und mit der Steuereinheit (7) verbunden. Die Steuereinheit (7) ist zur Anpassung der Relativgeschwindigkeit der ersten und zweiten Längsfördereinheit (5, 6) in Abhängigkeit der detektierten Ist-Lücke zur Bereitstellung einer definierten Soll-Lücke eingerichtet.

Fig. 1

EP 1 995 191 A1

**Beschreibung**

Die Erfindung betrifft eine Rundho!zfördereinrichtung mit einer Quertransporteinheit mit einer Fördereinheit, die zum Transport zum Rundholzstämmen in eine Vorzugsrichtung quer zur Längsachse der Rundholzstämme eingerichtet ist, und mit einer sich an die Quertransporteinheit anschließenden Längstransporteinheit mit einer ersten Längsfördereinheit und einer sich daran anschließenden zweiten Längsfördereinheit, die zum Transport der von der Quertransporteinheit auf die erste Längsfördereinheit übergebenden Rundholzstämme durch die erste Längsfördereinheit und zum Weitertransport durch die zweite Längsfördereinheit in einer Vorzugsrichtung in Richtung der Längsachse der Rundholzstämme eingerichtet ist.

Bei der Verarbeitung von Rundholz wird das Rundholz oftmals in Längsrichtung auf einem Förderband zu einer Bearbeitungsanlage transportiert. Das Auflegen der Rundholzstämme erfolgt dabei durch Querförderanlagen, mit denen das Rundholz in eine Förderrichtung quer zur Längsrichtung der Rundholzstämme transportiert wird. Zum Vereinzeln und Weitertransportieren des Rundholzes in Richtung quer zur Längsrichtung des Rundholzes werden oftmals Kettenförderer oder Zuteiler eingesetzt.

Für die nachfolgenden Bearbeitungsschritte ist es oftmals wichtig, dass die in Längsrichtung zur Bearbeitungsvorrichtung transportierten Rundholzstämme einen gleichen Abstand zueinander aufweisen. Um dies sicherzustellen ist bekannt, eine Ausrichtanlage in den Querförderbereich einzubauen. Eine solche an sich bekannte Ausrichtanlage hat einen Rollengang mit einer Mehrzahl parallel zueinander ausgerichteter, sich in eine Förderrichtung über eine Vorschublänge erstreckender, rotierbar angeordneter Rollen sowie mindestens eine mit den Rollen gekoppelte Antriebseinheit zum Rotationsantrieb der Rollen. Durch diese angetriebenen Rollen werden die Rundholzstämme tangential zur Rotationsrichtung zu einer Ausrichtwand befördert, gegen die sie mit ihrer Stirnseite anstoßen. Auf diese Weise werden die Rundhölzer gleich ausgerichtet, so dass beim nachfolgenden Abtransport der Rundhölzer mit dem Förderband die zur Weiterverarbeitung oftmals erforderlichen gleichen Abstände zwischen zwei Rundholzstämmen sichergestellt werden kann.

Diese Ausrichtanlage ist jedoch aufwändig und im Betrieb anfällig, da die Rundholzstämme bei der Ausrichtung springen und sich dabei verkanten können.

Aufgabe der vorliegenden Erfindung ist es daher, eine verbesserte Rundholzfördereinrichtung zu schaffen, bei der ein definierter Abstand zwischen zwei aufeinander folgenden Rundholzstämmen sichergestellt wird, die auf einer Längstransporteinheit in ihrer Längsrichtung transportiert werden.

Die Aufgabe wird mit der Rundholzfördereinrichtung der eingangs genannten Art dadurch gelöst, dass die Vorschubgeschwindigkeit der ersten und zweiten Längsfördereinheit unabhängig voneinander mit einer Steuereinheit steuerbar ist, eine Detektionseinheit zur Detektion der Ist-Lücke zwischen zwei auf der Längsfördereinheit aufeinander folgenden Rundholzstämmen vorgesehen und mit der Steuereinheit verbunden ist, und dass die Steuereinheit zur Anpassung der Relativgeschwindigkeit der ersten und zweiten Längsfördereinheit in Abhängigkeit von der detektierten Ist-Lücke zur Bereitstellung einer definierten Soll-Lücke eingerichtet ist.

Durch diese Rundholzfördereinheit, bei der die Relativgeschwindigkeit der zwei aufeinander folgenden ersten und zweiten Längsfördereinheiten zur Einstellung einer definierten Lücke zwischen zwei aufeinander folgenden Rundholzstämmen variiert wird, entfällt die Notwendigkeit einer Ausrichteinrichtung der Quertransporteinheit. Es ist lediglich erforderlich, dass die aktuelle Lücke zwischen zwei Rundholzstämmen erkannt wird und die aktuelle Lücke durch Variation der Relativgeschwindigkeit der Längsfördereinheiten angepasst wird.

Eine solche Anpassung der Lücke kann relativ einfach dadurch erfolgen, dass die Vorschubgeschwindigkeit der ersten, an die Quertransporteinheit sich anschließenden Längsfördereinheit erhöht wird, wenn die aktuelle Lücke im Vergleich zu einer gewünschten definierten Soll-Lücke zu groß ist. Derartige Unterschiede der Ist- und Soll-Lücken treten regelmäßig aufgrund der unterschiedlichen Längen der Rundholzstämme auf.

Bei der Änderung der Relativgeschwindigkeit wird vorzugsweise die Vorschubgeschwindigkeit der zweiten Längsfördereinheit auf die nachfolgenden Verarbeitungseinheiten abgestimmt und nicht zur Anpassung der Lücke variiert. Vielmehr erfolgt nur eine Anpassung der Vorschubgeschwindigkeit der ersten Längsfördereinheit, um einen Lückenausgleich vorzunehmen.

Die Detektionseinheit kann beispielsweise eine optische Stammerkennung sein. Besonders vorteilhaft ist es jedoch, wenn die Dektionseinheit eine quer zur Förderrichtung einer der Längsfördereinheiten, vorzugsweise der ersten Längsfördereinheit, ausgerichtete und diese zur Detektion eines Rundholzstamms und dessen Anfangs und Endes überstrahlende Lichtschranke hat.

Die Detektionseinheit kann beispielsweise am Ende der ersten Längsfördereinheit im Übergang zur zweiten Längsfördereinheit angeordnet sein. Dies hat den Vorteil, dass dann die Position des vorhergehenden Rundholzstamms ausschließlich durch die Vorschubgeschwindigkeit der zweiten Längsfördereinheit bestimmt wird, wenn die Lücke zum auf der ersten Längsfördereinheit transportierten Rundholzstamms durch Auslösen der Lichtschranke bei der Erkennung des Anfangs des nachfolgenden Rundholzstamms bestimmt wird.

Die Detektionseinheit ist vorzugsweise zur Detektion des Anfangs und des Endes von Rundholzstämmen an einer definierten Position eingerichtet. Die Steuereinheit ist dann zur ständig sich wiederholenden Berechnung der aktuellen Position des Endes eines Rundholzstamms und des Anfangs eines nachfolgenden Rundholzstamms sowie der aktuellen Lücke in Abhängigkeit von der Vorschubgeschwindigkeit der Rundholzstämme und des Detektionszeitpunkts des Anfangs oder Endes der Rundholzstämme an der definierten Position und zur Anpassung der Relativgeschwindigkeit in Abhängigkeit von der aktuellen Lücke eingerichtet.

Hierzu hat die zweite Längsfördereinheit vorzugsweise einen Weggeber, um die Position eines in die zweite Längsfördereinheit einlaufenden Stammanfangs bzw. eines die Detektionseinheit passierenden Stammendes weiterzuverfolgen und die aktuelle Position des Stammanfangs bzw. Stammendes zu kennen. Aus diesen aktuellen Positionen kann die Steuereinheit die Lücke $\Delta s$ zum Zeitpunkt $t_x$ einfach nach der Formel:

$$\Delta s = \text{Position } (t_x) - \text{Stammende vorhergehend} - \text{Position } (t_x)$$
$$- \text{Stammanfang nachfolgend}$$

berechnen.

Hierzu kann die Steuereinheit aber auch beispielsweise zur Berechnung der Lücke $\Delta s$ zum Zeitpunkt $t_x$ nach der Formel

$$\Delta s = t_x (v_2 - v_1) + v_1 \, t_A - v_2 \, t_E$$

mit der Vorschubgeschwindigkeit $V_1$ der ersten Längsfördereinheit, der Vorschubgeschwindigkeit $V_2$ der zweiten Längsfördereinheit, des Detektionszeitpunktes $t_E$ des Endes eines auf der zweiten Längsfördereinheit vorherlaufenden Rundholzstammes und $t_A$ des Anfangs eines auf der ersten Längsfördereinheit unmittelbar folgenden Rundholzstamms eingerichtet sein.

Weiterhin ist es vorteilhaft, wenn die Steuereinheit mit der Quertransporteinheit verbunden und zur Steuerung der Querfördergeschwindigkeit der Rundholzstämme in Abhängigkeit von der Änderung der Relativgeschwindigkeit zwischen erster und zweiter Längsfördereinheit, insbesondere der Geschwindigkeitsänderung der ersten Längsfördereinheit eingerichtet ist. Auf diese Weise wird verhindert, dass durch die Beschleunigung der ersten Längsfördereinheit mit der Zeit die Lücken zwischen zwei aufeinander folgenden Rundholzstämmen immer größer werden, wenn die Fördergeschwindigkeit der Quertransporteinheit unverändert bleibt.

Zur Steuerung der Querfördereinheit in der Zeit, in der ein Rundholzstamm auf die erste Längsfördertransporteinheit übergeben wurde und seine Länge noch unbekannt ist, wird eine definierte (virtuelle) angenommene, maximale Rundholzstammlänge als Einflussgröße zugrunde gelegt. Hierdurch wird der Quertransport maximal verlangsamt und eine Kollision bei der Übergabe von Rundholz von der Quertransporteinheit auf die erste Längstransporteinheit verhindert.

Die Erfindung wird nachfolgend anhand der beigefügten Zeichnungen beispielhaft näher erläutert. Es zeigen:

Figur 1 - Skizze einer Rundholzfördereinrichtung mit Quertransporteinheit und Längstransporteinheit;

Figur 2 - Flussdiagramm zur Steuerung des Längstransports von Rundholzstämmen;

Figur 3 - Flussdiagramm zur Ermittlung der Lücke zwischen zwei aufeinander folgenden Stämmen im Längstransport;

Figur 4 - Flussdiagramm der Steuerung der Geschwindigkeit beim Quertransport.

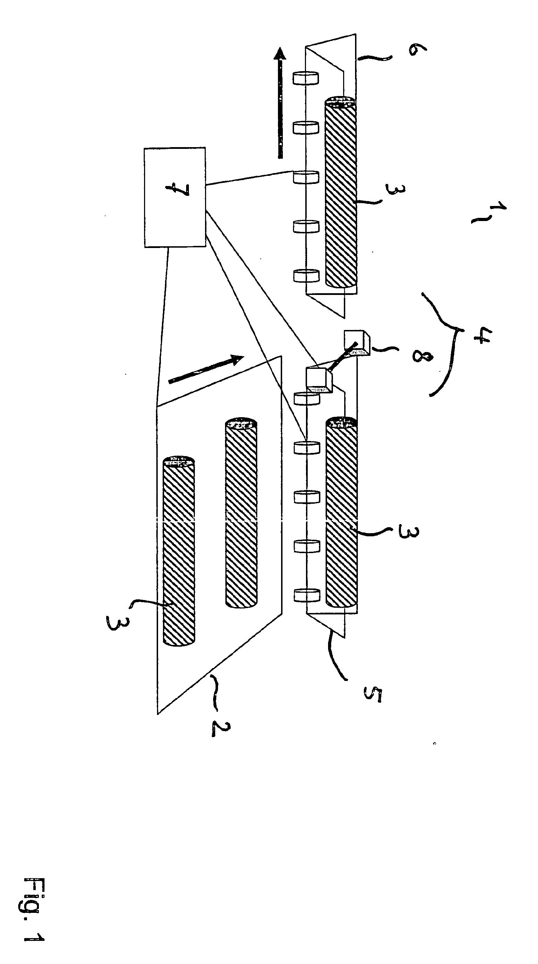

Figur 1 lässt eine Skizze einer Rundholzfördereinrichtung 1 erkennen, die eine Quertransporteinheit 2 zum Transport von Rundholzstämmen 3 in eine Vorzugsrichtung quer zur Längsachse der Rundholzstämme 3 hat. Direkt oder indirekt angeschlossen an die Quertransporteinheit 2 ist eine Längstransporteinheit 4, die zur Förderung der von der Quertransporteinheit 2 in die Längstransporteinheit 4 abgeworfenen Rundholzstämme 3 in eine Vorzugsrichtung in Längsrichtung der Rundholzstämme 3 eingerichtet ist. Die Längstransporteinheit 4 hat eine erste Längsfördereinheit 5, die beispielsweise einen V-Rollengang mit einer Vielzahl angetriebener Förderrollen aufweist. In Förderrichtung an die erste Längsfördereinheit 5 ist ggf. im Abstand hierzu eine zweite Längsfördereinheit 6 angeordnet, die ebenfalls beispielsweise als V-Rollengang ausgebildet sein kann. Die zweite Längsfördereinheit 6 ist beispielsweise vorgesehen, um die Rundholzstämme einer nachfolgenden Bearbeitungseinrichtung (nicht skizziert) zuzuführen. Hierzu ist die Vorschubgeschwindigkeit der zweiten Längsfördereinheit 6 an die Bearbeitungsgeschwindigkeit in der nachfolgenden Bearbeitungseinheit angepasst.

Die Steuerung der Vorschubgeschwindigkeit mindestens der ersten Längsfördereinheit 5 erfolgt mit Hilfe einer Steuereinheit 7. Die Steuereinheit 7 verfügt weiterhin über die Information der Vorschubgeschwindigkeit der zweiten Längsfördereinheit 6 sowie ggf. der Vorschubgeschwindigkeit der Quertransporteinheit 2.

Weiterhin ist eine Detektionseinheit 8 in Form einer Lichtschranke am Ende der ersten Längsfördereinheit 5 angrenzenden Übergang zur zweiten Längsfördereinheit 6 vorgesehen, deren Lichtstrahl sich quer zur Längsförderrichtung der Längsfördereinheiten 5, 6 erstreckt, die fluchtend zueinander angeordnet sind. Die Detektionseinheit 8 ist so ausgerichtet, dass sie beim Vorschub eines Rundholzstamms 3 durch Lichtstrahlunterbrechung den Anfang eines Rundholzstamms und durch Wiederfreigabe des Lichtstrahls des Ende eines Rundholzstamms erkennt. Die Detektionseinheit 8 liefert somit Signalflanken, die zur Erkennung des Anfangs und Endes von Rundholzstämmen ausgewertet werden können.

Anstelle von Lichtschranken als Detektionseinheit sind auch andere, vorzugsweise berührungslose, Detektoren einsetzbar, insbesondere solche, die unempfindlich gegen Verschmutzung sind.

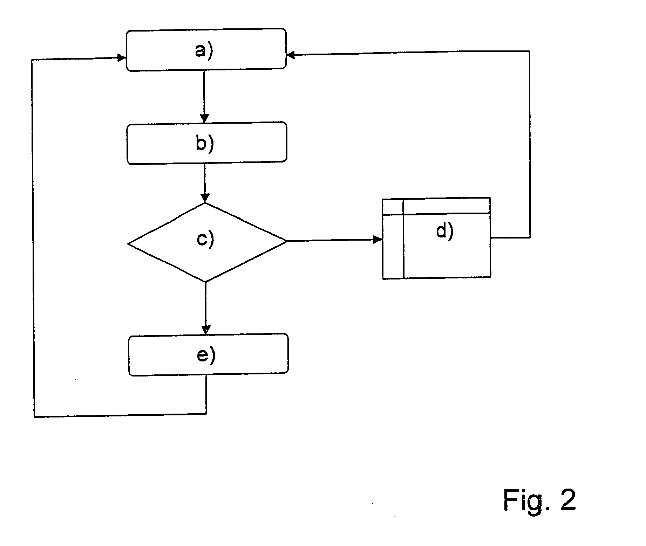

Figur 2 lässt ein Flussdiagramm des Ablaufs der Geschwindigkeitssteuerung durch die Steuereinheit 7 in Abhängigkeit von der Größe der ermittelten Lücke zwischen zwei aufeinander folgenden Rundholzstämmen 3 erkennen.

In einem ersten Schritt a) erfolgt die Berechnung der Lücke zwischen zwei Rundholzstämmen im Längstransport.

In einem Schritt b) wird dann die aktuelle Liniengeschwindigkeit für den Vorschub der Rundholzstämme 3 auf der Längstransporteinheit 4 ermittelt. Diese ergibt sich beispielsweise aus dem Antriebssteuersignal für die zweite Längsfördereinheit 6.

In Abhängigkeit von der im Schritt a) berechneten tatsächlichen Ist-Lücke zwischen zwei aufeinander folgenden Rundholzstämmen 3 wird im Schritt c) überprüft, ob die aktuelle Ist-Lücke größer als eine definierte Soll-Lücke ist, die durch Anpassung der Relativgeschwindigkeit der ersten und zweiten Längsfördereinheit 5 und 6 bereit gestellt werden soll.

Für den Fall, dass die aktuelle Ist-Lücke der Soll-Lücke entspricht, wird die Vorschubgeschwindigkeit der ersten und zweiten Längsfördereinheit 5 und 6 auf einen Geschwindigkeitsgleichlauf eingestellt (Schritt d)). Ansonsten wird im Schritt e) die Relativgeschwindigkeit der ersten und zweiten Längsfördereinheit 5 und 6 so angepasst, dass die Soll-Lücke erreicht ist, während der nachfolgende Rundholzstamm 3 sich noch auf der ersten Längsfördereinheit befindet und von dieser vorgeschoben werden kann. Hierzu wird die Vorschubgeschwindigkeit der ersten Längsfördereinheit 5 um ein geeignetes Maß angehoben.

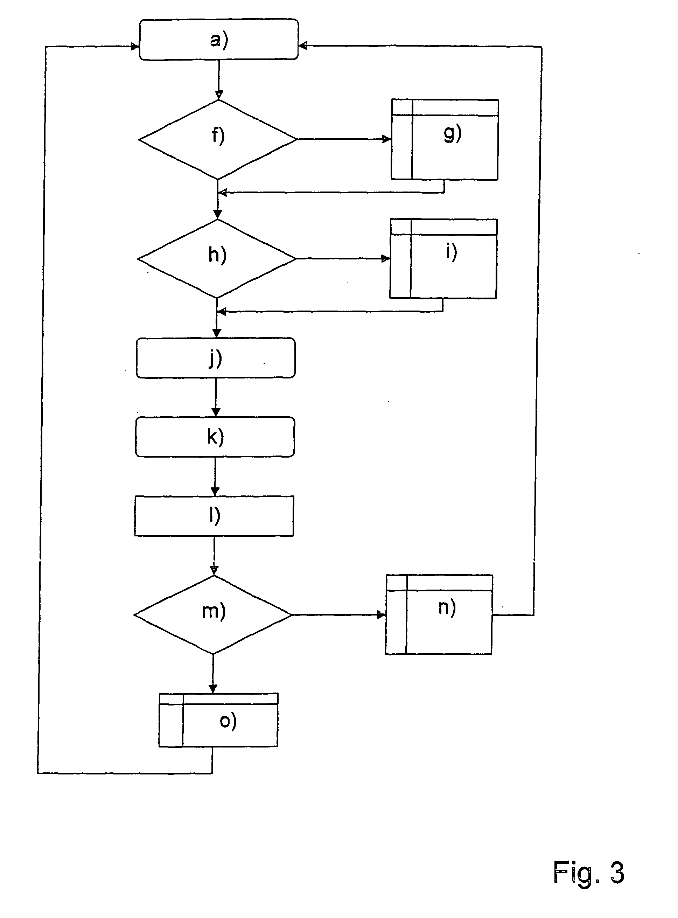

Figur 3 lässt ein Flussdiagramm für den Ablauf der Berechnung der Lücken erkennen. Dabei wird zunächst in einem Schritt f) mit Hilfe einer Lichtschranke anhand einer Signalflanke der Lichtschranke das Ende eines Rundholzstamms 3 erkannt. Diese aktuelle Position für das Ende des Rundholzstamms wird abgespeichert (Schritt g)).

Danach wird anhand einer weiteren Signalflanke der Lichtschranke der Anfang des nachfolgenden Rundholzstamms erkannt (Schritt h)) und die aktuelle Position des Anfangs des nachfolgenden Rundholzstamms gespeichert (Schritt i)).

Die Position des Endes des vorhergehenden Rundholzstamms wird anhand des bekannten Vorschubweges der zweiten Längsfördereinheit 6 aktualisiert (Schritt j)). Gleichermaßen wird die Position des Anfangs des nachfolgenden Rundholzstamms anhand des bekannten Vorschubweges der ersten Längsfördereinheit 5 aktualisiert (Schritt k)). Der Vorschubweg ergibt sich z.B. einfach durch Inkrementieren von Impulsen eines mit der zweiten Längsfördereinheit 5 gekoppelten Weggebers (z.B. Drehzahlgeber an einer Antriebsrolle), beginnend mit der Auslösung der Detektionseinheit (z.B. Lichtschranke) bei einem Stammanfang oder Stammende.

Die aktuelle Lücke zwischen den aufeinander folgenden Rundholzstämmen 3 wird aus der Differenz der Position des Stammendes zur Position des Stammanfangs berechnet (Schritt I)):

$$\text{Lücke} = \text{Position Stammende} - \text{Position Stammanfang.}$$

In einem Schritt m) wird überprüft, ob die Lückenberechnung gültig ist. Für den Fall, dass dies der Fall ist, wird die aktuelle Lücke im Schritt n) abgespeichert. Anderenfalls wird in einem Schritt o) die aktuelle Lücke gelöscht und die Lückenberechnung neu begonnen.

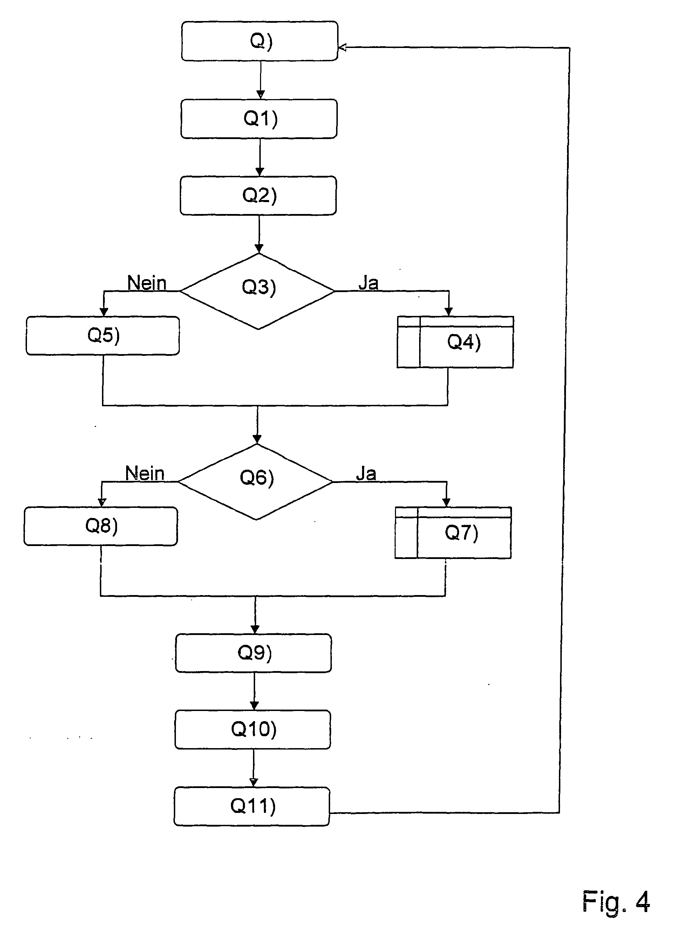

Figur 4 lässt ein Flussdiagramm zur Geschwindigkeitssteuerung der Quertransporteinheit 2 erkennen.

In einem ersten Schritt q1) wird die aktuelle Position von Rundholzstämmen 3 im Quertransport ermittelt. Dies erfolgt anhand einer Grundstellung von 0 Grad bzw. von 360 Grad.

In einem Schritt q2) wird der Weg des Quertransports eines Rundholzstamms 3 bis zur nächsten Übergabe des Rundholzstamms an die Längstransporteinheit 4 berechnet. Dieser Weg liegt im Bereich von 0 Grad bis 359 Grad.

In einem Schritt q3) wird überprüft, ob ein neuer Rundholzstamm in die Längstransporteinheit 4 übergeben worden ist. Falls dies der Fall ist, wird in einem Schritt q4) die Position des Rundholzstammendes gespeichert. Hierzu wird eine virtuelle Stammlänge als maximale Holzlänge angenommen, um Kollisionen bei der Stammübergabe von der Quertransporteinheit 2 auf die Längstransporteinheit 4 zu verhindern. Durch die Steuerung mit der maximalen Holzlänge wird die Quertransportgeschwindigkeit maximal reduziert.

Anderenfalls wird die Position des virtuellen Endes des Rundholzstamms aktualisiert (Schritt q5).

In einem Schritt q6) wird überprüft, ob die Lichtschranke der Detektionseinheit 8 der Längstransporteinheit 4 frei geworden ist. Falls dies der Fall ist, wird die Position des realen Endes des Rundholzstamms abgespeichert (Schritt q7). Anderenfalls wird die Position des realen Endes des Rundholzstamms aktualisiert (Schritt q8)).

In einem nachfolgenden Schritt q9) wird dann die Vorschubgeschwindigkeit der Längstransporteinheit ermittelt, um in einem folgenden Schritt q10) die Zeit zu berechnen, bis das Ende des Rundholzstammes den Einwurfbereich verlassen hat. Diese Zeit t (Längstransport) berechnet sich aus der Geschwindigkeit v der Längstransporteinheit 4 und der Länge s (Stamm) des auf der ersten Längsfördereinheit 5 aufliegenden Rundholzstamms nach der Formel:

$$t \text{ (Längstransport)} = s \text{ (Stamm)} / v \text{ (Längstransport)}$$

In einem Schritt q11) wird dann die Geschwindigkeit des Quertransports durch die Quertransporteinheit 2 in Abhängigkeit von dem Weg s (Quertransport) des Quertransports bis zur nächsten Stammübergabe und der im Schritt q10 berechneten Zeit, bis das Ende des Rundholzstamms den Einwurfbereich verlassen hat, wie folgt berechnet:

$$v \text{ (Quertransport)} = s \text{ (Quertransport)} / t \text{ (Längstransport)}.$$

Bei der Steuerung der Quertransportgeschwindigkeit kann ausgenutzt werden, dass ein zur Ansteuerung der Quertransporteinheit 2 verwendeter Frequenzumformer die aktuelle Position des Quertransportes und die gesamte Strecke eines Zyklus kennt. Hieraus ergibt sich, dass der Weg bis zur nächsten Übergabe eines Rundholzstamms an die Längstransporteinheit 4 auch bekannt ist. Da dieser Weg im Frequenzumformer bekannt ist, kann zu jedem Zeitpunkt eine Geschwindigkeitskorrektur des Quertransports durchgeführt werden. Somit können Geschwindigkeitsänderungen im Längstransport direkt in eine Korrekturberechnung im Quertransport einflie-ßen.

Bei der Anordnung der Detektionseinheit bzw. Lichtschranke 8 im Längstransport sollte weiterhin darauf geachtet werden, dass kein Schlupf bei der Verfolgung des Endes der Rundholzstämme auftritt.

**Patentansprüche**

1. Rundholzfördereinrichtung (1) mit einer Quertransporteinheit (2) mit einer Fördereinheit, die zum Transport von Rundholzstämmen (3) in eine Vorzugsrichtung quer zur Längsachse der Rundholzstämme (3) eingerichtet ist, und mit einer sich an die Quertransporteinheit (2) anschließenden Längstransporteinheit (4) mit einer ersten Längsfördereinheit (5) und einer sich daran anschließenden zweiten Längsfördereinheit (6), die zum Transport der von der Quertransporteinheit (2) auf die erste Längsfördereinheit (5) übergebenen Rundholzstämme (3) durch die erste Längsfördereinheit (5) und zum Weitertransport durch die zweite Längsfördereinheit (6) in einer Vorzugsrichtung in Richtung der Längsachse der Rundholzstämme (3) eingerichtet, **dadurch gekennzeichnet, dass** die Vorschubgeschwindigkeit der ersten und zweiten Längsfördereinheit (5, 6) unabhängig voneinander mit einer Steuereinheit (7) steuerbar ist, eine Detektionseinheit (8) zur Detektion der Ist-Lücke zwischen zwei auf der Längstransporteinheit (4) aufeinanderfolgenden Rundholzstämmen (3) vorgesehen und mit der Steuereinheit (7) verbunden ist, und das die Steuereinheit (7) zur Anpassung der Relativgeschwindigkeit der ersten und zweiten Längsfördereinheit (5, 6) in Abhängigkeit von der detektierten Ist-Lücke zur Bereitstellung einer definierten Soll-Lücke eingerichtet ist.

2. Rundholzfördereinrichtung (1) nach Anspruch 1, **dadurch gekennzeichnet, dass** die Steuereinheit (7) unter Konstanthaltung der auf nachfolgende Verarbeitungseinrichtungen abgestimmten Vorschubgeschwindigkeit der zweiten Längsfördereinheit (6) zur Anpassung der Geschwindigkeit der ersten Längsfördereinheit (5) eingerichtet ist.

3. Rundholzfördereinrichtung (1) nach Anspruch 1 oder 2, **dadurch gekennzeichnet, dass** die Detektionseinheit (8) eine quer zur Förderrichtung einer der Längsfördereinheiten (5, 6) ausgerichtet und diese zur Detektion eines Rundholzstamms (3) und dessen Anfangs und Endes überstrahlende Lichtschranke hat.

4. Rundholzfördereinrichtung (1) nach einem der vorhergehenden Ansprüche, **dadurch gekennzeichnet, dass** die Detektionseinheit (8) zur Detektion des Anfangs und des Endes von Rundholzstämmen (3) an einer definierten Position eingerichtet ist und die Steuereinheit (7) zur ständig sich wiederholenden Berechnung der aktuellen Position des Endes eines Rundholzstamms (3) und des Anfangs eines nachfolgenden Rundholzstamms (3) sowie der aktuellen Lücke in Abhängigkeit von der Vorschubgeschwindigkeit der Rundholzstämme (3) und des Detektionszeitpunkts des Anfangs oder Endes der Rundholzstämme (3) an der definierten Position und zur Anpassung der Relativgeschwindigkeit in Abhängigkeit von der aktuellen Lücke eingerichtet ist.

5. Rundholzfördereinrichtung (1) nach Anspruch 4, **dadurch gekennzeichnet, dass** die Steuereinheit (7) zur Berechnung der Lücke $\Delta s$ zum Zeitpunkt $t_x$ nach der Formel

$$\Delta s = t_x\,(v_2 - v_1) + v_1\,t_A - v_2\,t_E$$

mit der Vorschubgeschwindigkeit $V_1$ der ersten Längsfördereinheit (5), der Vorschubgeschwindigkeit $V_2$ der zweiten Längsfördereinheit (6), des Detektionszeitpunktes $t_E$ des Endes eines auf der zweiten Längsfördereinheit (6) vorherlaufenden Rundholzstammes (3) und $t_A$ des Anfangs eines auf der ersten Längsfördereinheit (5) unmittelbar folgenden Rundholzstamms (3).

6. Rundholzfördereinrichtung (1) nach Anspruch 4, **dadurch gekennzeichnet, dass** die zweite Längsfördereinheit (6) einen Weggeber zur Erfassung des von einem Rundholzstamm (3) auf der zweiten Längsfördereinheit (6) zurückgelegten Weges hat und die Steuereinheit (7) zur Berechnung der Lücke $\Delta s$ zum Zeitpunkt tx aus den aus dem Weg bestimmten aktuellen Positionen des Stammendes des vorhergehenden Rundholzstammes (3) und des Stammanfangs des nachfolgenden Rundholzstammes (3) eingerichtet ist.

7. Rundholzfördereinrichtung (1) nach Anspruch 6, **dadurch gekennzeichnet, dass** der Weggeber ein an einer Führungsrolle der zweiten Längsfördereinheit angeordneter Inkrementalgeber zur Generierung jeweils eines Impulses nach Förderung einer definierten Teilstrecke ist.

8. Rundholzfördereinrichtung (1) nach einem der vorhergehenden Ansprüche, **dadurch gekennzeichnet, dass** die Steuereinheit (7) weiterhin mit der Quertransporteinheit (2) verbunden und zur Steuerung der QuerfördergeschwindigKeit der Rundholzstämme (3) in Abhängigkeit von der Änderung der Relativgeschwindigkeit zwischen erster und zweiter Längsfördereinheit (5, 6), insbesondere der Geschwindigkeitsänderung der ersten Längsfördereinheit (5) eingerichtet ist.

9. Rundholzfördereinrichtung (1) nach Anspruch 1, **dadurch gekennzeichnet, dass** die Steuereinheit (7) zur Steuerung der Querfördergeschwindigkeit in der Zeit, in der ein Rundholzstamm (3) mit unbekannter Länger auf der ersten Längsfördereinheit (6) ist, eine vorgegebene maximale Stammlänge annimmt.

Fig. 1

Fig. 2

Fig. 3

Fig. 4

**Europäisches Patentamt**

**EUROPÄISCHER RECHERCHENBERICHT**

**Nummer der Anmeldung**

EP 08 00 9473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 568 452 A (GRECON DIMTER HOLZOPTIMIERUNG [DE]) 31. August 2005 (2005-08-31) * das ganze Dokument * ----- | 1-4,6 | INV. B65G47/31 ADD. B65G43/08 |
| X | US 5 267 638 A (DOANE MARTIN R [US]) 7. Dezember 1993 (1993-12-07) * Spalte 7, Zeilen 5-34 * * Spalte 9, Zeilen 21-43; Abbildungen 6,8 * ----- | 1-7 | |
| X | US 2002/000361 A1 (REILLY JEFFREY [US]) 3. Januar 2002 (2002-01-03) * Absätze [0005] - [0007], [0013], [0014], [0016], [0017], [0020], [0022], [0023]; Abbildungen 1-3 * ----- | 1-4,8,9 | |
| X | US 5 711 410 A (CAI CHUNSHENG [US] ET AL) 27. Januar 1998 (1998-01-27) * Spalte 4, Zeile 35 - Spalte 6, Zeile 17 * * Spalte 6, Zeilen 58-65 * * Spalte 8, Zeilen 54-62; Abbildungen 1,2 * ----- | 1-4 | RECHERCHIERTE SACHGEBIETE (IPC) B65G B27B |

Der vorliegende Recherchenbericht wurde für alle Patentansprüche erstellt

| Recherchenort | Abschlußdatum der Recherche | Prüfer |
|---|---|---|
| München | 22. September 2008 | Garlati, Timea |

EP 1 995 191 A1

**ANHANG ZUM EUROPÄISCHEN RECHERCHENBERICHT**
**ÜBER DIE EUROPÄISCHE PATENTANMELDUNG NR.**

EP 08 00 9473

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-09-2008

| Im Recherchenbericht angeführtes Patentdokument | | Datum der Veröffentlichung | Mitglied(er) der Patentfamilie | | Datum der Veröffentlichung |
|---|---|---|---|---|---|
| EP 1568452 | A | 31-08-2005 | CN | 1660552 A | 31-08-2005 |
| | | | DE 102004010334 A1 | | 08-09-2005 |
| | | | US | 2005183554 A1 | 25-08-2005 |
| US 5267638 | A | 07-12-1993 | US | 5341916 A | 30-08-1994 |
| US 2002000361 | A1 | 03-01-2002 | KEINE | | |
| US 5711410 | A | 27-01-1998 | KEINE | | |

EPO FORM P0461

Für nähere Einzelheiten zu diesem Anhang : siehe Amtsblatt des Europäischen Patentamts, Nr.12/82